# EUROPEAN PATENT SPECIFICATION

(11) **EP 3 794 964 B1**
(45) Date of publication and mention of the grant of the patent: **01.05.2024**
(21) Application number: 20197409.4
(22) Date of filing: 22.09.2020
(51) Int. Cl.: A24C 5/32, A24C 5/34, B65G 43/10, B65G 47/84, B65H 9/20, B65G 1/00, B65G 49/08, B65H 1/00, B65H 83/00, B65G 43/08

(54) **METHOD FOR CALIBRATING A MACHINE FOR THE PRODUCTION OF ROD-SHAPED ARTICLES**
VERFAHREN ZUM KALIBRIEREN EINER MASCHINE ZUR HERSTELLUNG VON STABFÖRMIGEN ARTIKELN
PROCÉDÉ D'ÉTALONNAGE D'UNE MACHINE POUR LA PRODUCTION D'ARTICLES EN FORME DE TIGE

(30) Priority: 23.09.2019 IT 201900016964; 23.09.2019 IT 201900016970
(43) Date of publication of application: 24.03.2021
(73) Proprietor: G.D S.p.A., 40133 Bologna (IT)
(72) Inventor: GAMBERINI, Giuliano, 40133 BOLOGNA (IT); ESPOSTI, Marco, 40133 BOLOGNA (IT); SALVADEO, Daniele, 40133 BOLOGNA (IT); RISPOLI, Nicola, 40133 BOLOGNA (IT)
(74) Representative: Bianciardi, Ezio

(56) References cited:
- WO-A1-2018/158655
- DE-A1-102011 006 121
- GB-A- 2 473 230
- US-A1- 2005 061 337

## Description

This invention addresses the field of the manufacture of articles, in particular smoking articles.

More specifically, this invention relates to the field of calibrating machines for the production of articles, in particular rod-shaped articles. By "rod-shaped smoking articles" is meant all types of cigarettes, cigars, cigarillos and the like.

The articles are handled by conveyor devices, including inspection conveyors and the like, such as, for example, inspection drums, with specific inspection devices used to check the properties of the products.

The sensors used for this purpose usually need to be periodically recalibrated in order to ensure the quality properties of the end products. For this purpose, the sensors are calibrated on a sample product.

Generally speaking, the procedure involves bringing the product through an inspection zone where it is measured and, by comparing a theoretical value with a value measured by the sensor, calibration is performed, if necessary (or the system is validated).

GB 2 473 230 discloses a method for calibrating a contact image sensor of a machine for the production of rod-shaped smoking articles by performing measurements on a sample product.

This operation is usually carried out manually by an operator who has to insert the sample product for each of the sensors/devices to be checked.

Taking a filter tip attachment machine as an example, the main operational conveyors where calibration is to be performed are provided with a large number of flutes (for example, forty or eighty flutes) configured to receive and hold the rod-shaped articles. The operator has to take the sample product and insert it into a specific flute of the operational conveyor, perform calibration, take the sample product out and repeat the operation for each flute of the operational conveyor. In other words, for machines provided, for example, with forty flutes, the above operations must be repeated forty times: that is to say, as many times as there are flutes on the operational conveyor.

Disadvantageously, proceeding manually is highly time-consuming and is open to human error.

Training an operator to enable them to carry out the above operation correctly is also highly time-consuming and costly in economic terms. In this context, the technical purpose which forms the basis of this invention is to propose a method for calibrating a machine for the production of rod-shaped articles to overcome the above mentioned drawbacks of the prior art.

More specifically, this invention has for an aim to provide a method for calibrating a machine for the production of rod-shaped articles allowing the calibration procedure to be automated.

Also an aim of this invention is to provide a method for calibrating a machine for the production of rod-shaped articles allowing human impact on the calibration procedure to be reduced so as to ensure positive and efficient calibration of the measuring systems on the machine.

The technical purpose indicated and the aims specified are substantially achieved by a method for calibrating a machine for the production of rod-shaped articles comprising the technical features described in one or more of the appended claims.

This invention discloses a method for calibrating a machine, in particular a machine for the production of rod-shaped articles. The machine comprises a plurality of conveyors, each provided with a plurality of flutes for accommodating the articles. The method comprises the steps of placing a sample product in a first flute of a first conveyor associated with at least one sensor and, by means of the at least one sensor, performing at least one measurement on the sample product held in the first suction flute of the first conveyor while the sample product is moved according to an operating movement of the first conveyor. The method also comprises the steps of transferring the sample product from the first conveyor to a flute of a second conveyor, displacing the first conveyor and the second conveyor from each other and transferring the sample product from the second conveyor to a second flute of the first conveyor, adjacent to the first flute. The method then comprises repeating the step of measuring while the sample product held in the second flute is moved according to an operating movement of the first conveyor. The values obtained from the measurements performed are then processed in a control unit to allow the at least one sensor to be calibrated.

Advantageously, the above steps are repeated a plurality of times, preferably until calibration has been completed on all the flutes of the first conveyor.

Advantageously, the method outlined above allows automating the procedure for calibrating the machine for the production of smoking articles.

Another advantage of the proposed solution is that the method may be used both on complex and simple machinery and minimizes the need for human intervention.

The dependent claims, correspond to different embodiments of the invention.

In a variant of it, this invention provides a method for calibrating a machine for the production of articles, specifically rod-shaped (smoking) articles, where the machine comprises a plurality of conveyors, each provided with a plurality of flutes for accommodating the articles, and where the method comprises the following steps:
- placing a sample product in a flute of a first conveyor of the plurality of conveyors, where the first conveyor is associated with at least one sensor;
- performing, with the at least one sensor, at least one measurement on the sample product held in the flute of the first conveyor while the sample product is moved according to an operating movement of the first conveyor;
- reversing the direction of movement of the first conveyor a predetermined number of times to obtain a succession of operating movements alternated with reverse movements;
- repeating the step of measuring the sample product at least for each of the operating movements of the first conveyor with the sample product seated in the same flute;
- processing in a control unit the values obtained from the measurements performed so as to calibrate the at least one sensor. In an embodiment, the step of measuring the sample product is also carried out for each of the reverse movements of the first conveyor with the sample product seated in the same flute.

In an embodiment, the flutes of the first conveyor are associated with a single, common sensor, preferably fixed or stationary.

In a different embodiment, each flute of the first conveyor is associated with a respective sensor which is movable synchronously with the flutes of the first conveyor and/or which is mounted on the first conveyor.

Preferably, the method also comprises a step of calibrating the sensor based on a plurality of measurements obtained by measuring the sample product seated in the same flute. This step of calibrating can be accomplished by calculating an average measurement from the plurality of measurements.

Preferably, the step of repeating the step of measuring the sample product at least for each of the operating movements of the first conveyor is accomplished by repeating the step of measuring for a number of times greater than or equal to 2, preferably greater than or equal to 5.

In an embodiment, the method also comprises, before each step of reversing the direction of movement of the first conveyor, a step of transferring the sample product from the first conveyor to at least one second conveyor, preferably adjacent to the first conveyor, and further comprising, after each step of reversing the direction of movement of the first conveyor, a step of transferring the sample product from the at least one second conveyor to the first conveyor. The step of reversing is carried out simultaneously on the first conveyor and on the at least one second conveyor.

In an embodiment, the method comprises the following steps:
- placing the sample product in the flute of the first conveyor;
- performing at least one measurement on the sample product held in the flute of the first conveyor;
- reversing the direction of movement of the first conveyor a predetermined number of times;
- repeating the step of measuring the sample product at least for each of the operating movements of the first conveyor with the sample product seated in the same flute.

The steps of placing the sample product in the flute of the first conveyor, performing at least one measurement on the sample product, reversing the direction of movement of the first conveyor a predetermined number of times and repeating the step of measuring the sample product at least for each of the operating movements of the first conveyor define a sub-step of calibrating associated with the flute of the first conveyor, and wherein the sub-step of calibrating is repeated for a plurality of different flutes of the first conveyor, preferably for all the flutes of the first conveyor.

Preferably, between consecutive sub-steps of calibrating, specifically associated with different flutes of the first conveyor, the sample product is automatically moved between different (preferably adjacent) flutes of the first conveyor with the aid of at least one second conveyor forming part of the plurality of conveyors and preferably tangent to the first conveyor.

Further features and advantages of the invention are more apparent in the indicative, hence non-limiting, description of a preferred but non-exclusive embodiment of a method for calibrating a machine for the production of rod-shaped articles, as illustrated in the accompanying drawings, in which:
- Figures 1a and 1b schematically represent an embodiment of the method of this invention;
- Figures 2A-2F schematically represent a further embodiment of the method of this invention;
- Figures 3A-3E schematically represent an embodiment of this invention;
- Figure 4 is a schematic representation of a further embodiment of the method of this invention;
- Figure 5 is a schematic representation of a further embodiment of the method of this invention.

This invention relates to a method for calibrating a machine 1 for the production of rod-shaped articles, specifically smoking articles. By "rod-shaped smoking articles" is meant all types of cigarettes, cigars, cigarillos and the like.

With reference to the accompanying drawings, the numeral 1 denotes the machine 1 in its entirety, specifically a machine for the production of smoking articles, comprising a plurality of conveyors (2, 3 and 4), each provided with a plurality of flutes (2a, 3a, 4a).

The term "conveyor" is used to denote any kind of device suitable for transporting the smoking articles. For example, the term "conveyor" may denote carousels, belts or bands, whether or not provided with independent motors or independently driven working units. Alternatively, the term "conveyor" may denote drums such as those illustrated in the accompanying drawings.

The term "flute" is used to denote a housing of any kind suitable for receiving and holding an article as it moves along its path in the machine 1. For example, the flutes 2a, 3a, 4a may be suction flutes (as those in the accompanying drawing may also be). Alternatively, the flutes may be grippers, for example.

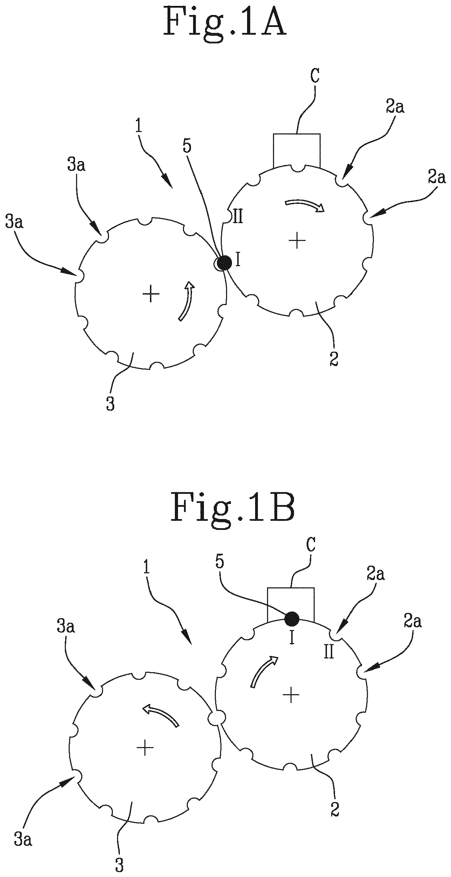

In the embodiment of Figures 1A and 1B, the machine 1 comprises at least a first conveyor 2, provided with a plurality of flutes 2a and a second conveyor 3, provided with a plurality flutes 3a, for accommodating the aforementioned articles. More specifically, the plurality of flutes 2a and 3a is configured to accommodate and hold the articles. In the accompanying drawings, the number of flutes for each of the conveyors 2 and 3 is reduced for convenience of illustration but it is stressed that the first conveyor in particular normally has a large number of flutes 2a (such as, for example, forty or eighty flutes 2a).

In the accompanying drawings, the first conveyor 2 is made in the form of a measuring drum. The first conveyor 2 is associated with at least one sensor, which may be, for example, a pneumatic sensor. Alternatively, the at least one sensor may be an optical sensor (for example, it may be a camera). In another embodiment, the sensor may be an electromagnetic sensor (for example, an ultrasonic sensor or, alternatively, a microwave sensor).

More specifically, the sensors may be sensors for measuring density. Alternatively, the sensors may of a type suitable for detecting the presence of filter capsules. The sensors may be of a type suitable for detecting the presence of foreign bodies which can spoil the quality of the smoking article made in the machine 1.

In an embodiment, the first conveyor 2 may be provided with a single sensor and each flute 2a of the first conveyor 2 may be associated with the sensor. Preferably, the flutes 2a of the first conveyor 2 are associated with a single, common sensor, that is fixed or stationary. Alternatively, the first conveyor 2 may be provided with a plurality of sensors. More specifically, in this second embodiment, each suction flute 2a of the first conveyor 2 is associated with a respective sensor. Preferably, each flute 2a of the first conveyor 2 may be associated with a respective sensor which is movable synchronously with the flutes 2a of the first conveyor 2 and/or which may be mounted on the first conveyor 2.

In other words, the sensor may be associated with the first conveyor 2 and/or with each of the flutes 2a.

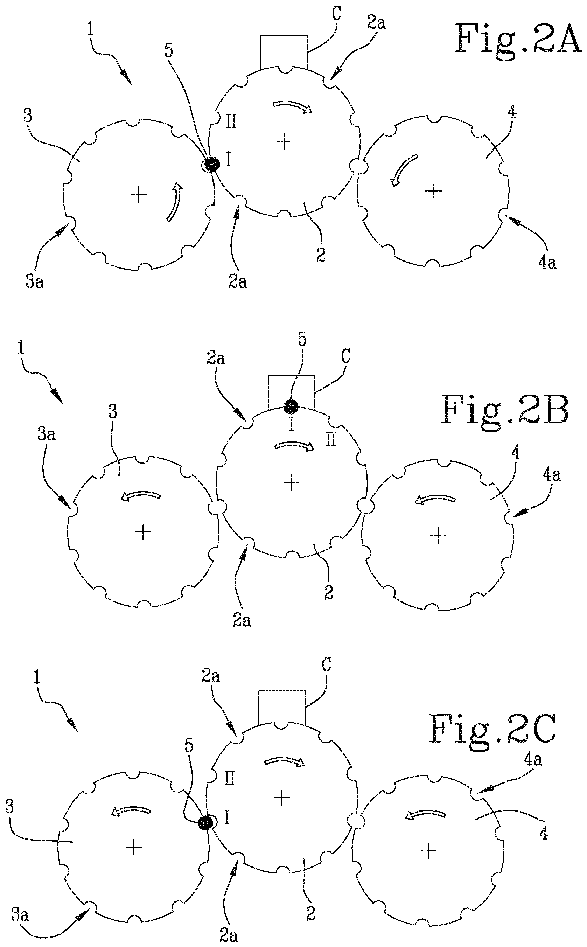

In the embodiment of the machine 1 illustrated in Figures 2A to 2F, the machine 1 comprises a third conveyor 4, provided with a plurality of flutes 4a. In the embodiment illustrated in Figures 2A-2F, the second conveyor 3 is located upstream of the first conveyor 2 and the third conveyor 4 is located downstream of the first conveyor 2. Alternatively, the second conveyor 3 may be located downstream of the first conveyor 2 and the third conveyor 4 upstream of the first conveyor 2.

In the embodiments of the machine described above (which also represent two embodiments of the method of this invention), the conveyors 2, 3 and 4 (if present) are driven at reduced speed in the same way as during normal production of the articles.

More specifically, in the accompanying drawings, the conveyors 2, 3 and 4 (if present) rotate at the aforementioned production speed. Further, in the accompanying drawings, each conveyor is provided with its own, independent axis. In other words, the first conveyor 2, the second conveyor 3 and the third conveyor 4 (if present) can rotate independently of each other. Thus, each conveyor is provided with independent motors with which it is possible to control each single axis to drive all the conveyors 2, 3 and 4 in rotation. The method thus applies to a machine 1 in which the first conveyor 2 is driven in rotation independently at least of the second conveyor 3. In other words, the method applies to a machine 1 in which the first conveyor 2 is driven by a motor that is independent of the second conveyor 3.

With reference to Figures 1A and 1B, the method comprises placing a sample product 5 in a first flute I of the first conveyor 2, associated with the at least one sensor. By sample product 5 is meant a calibrating device representing the article to be made/transported by the machine 1 for making the articles.

Placing the sample product 5 may mean putting the sample product 5 on the second conveyor 3. More specifically, the sample product 5 may be placed in a flute 3a of the second conveyor 3 and, as shown in Figure 1A, the sample product 5 may be transferred to the first conveyor 2.

As shown in Figure 1A, the sample product 5 is transferred from the second conveyor 3 to a flute 2a of the first conveyor 2. In the accompanying drawings, the reference label I indicates the first flute 2a to receive the sample product 5.

At this point, as shown in Figure 1B, a measurement is performed on the sample product 5 held in the first flute I of the first conveyor 2. The measurement is performed by at least one sensor while the sample product 5 is moved according to an operating movement of the first conveyor 2. By operating movement is meant the movement normally used during the production of the smoking articles. In the embodiment shown in Figures 1A and 1B, the operating movement is represented by an operating rotation of the first conveyor 2.

As shown in Figure 1B, the sample product 5 is transported through an inspection zone C, where measurements are taken and compared with a theoretical value. By theoretical value is meant a reference value expected of the measurement performed by the sensor, corresponding to the ideal operation which allows obtaining the desired results from the production of the articles. In both of the embodiments described above (single sensor or plurality of sensors), if the measured value and the theoretical value coincide, the result is validated; otherwise, calibration (as described above) is performed as a function of the difference between the measurement values. In other words, the values obtained from the measurements performed are then processed in a specific control unit to allow the at least one sensor to be calibrated.

This is followed by a step which brings the sample product 5 back to the second conveyor 3. In other words, the sample product is transferred from the first conveyor 2 to a flute 3a of the second conveyor 3. In the embodiment just described, this step occurs by rotating the first conveyor 2 which, after passing the inspection zone C, proceeds along its normal path and transports the sample product 5 to the second conveyor 3. On reaching the second conveyor 3, the sample product 5 is received by the second conveyor 3 and separated from the first conveyor 2, which is tangent to the second conveyor 3.

At this point, the method comprises displacing the first conveyor 2 and the second conveyor 3 from each other. Displacement allows the step of measuring the sample product 5 to be performed for the next flute 2a of the first conveyor 2. In other words, the method comprises a step of transferring the sample product 5 from the second conveyor 3 to a second flute II of the first conveyor 2. In the accompanying drawings, the second flute II is adjacent to the first flute I. The step of measuring is thus repeated while the sample product 5 is held in a second flute II and moved according to an operating rotation of the first conveyor 2.

In other words, each time a measurement is performed for a specific flute 2a of the first conveyor 2, and after the sample product 5 is returned to the second conveyor 3, the two conveyors are displaced so that the sample product 5 can be transferred from a flute 3a of the second conveyor 3 to the next flute 2a following the flute I in which the measurement was performed previously.

More specifically, the step of displacing allows calibration to be performed automatically as a function of comparing the measured value with the theoretical value for as many times as there are flutes 2a on the first conveyor 2.

A first embodiment of the step of displacing is accomplished by moving the second conveyor 3 by a distance corresponding to the pitch, or a multiple of the pitch between adjacent flutes 2a of the first conveyor 2. In other words, the second conveyor 3 is moved independently of the first conveyor 2 in such a way that once the step of transporting the sample product 5 from the second conveyor 3 to the first conveyor 2 has been completed, the sample product 5 is transferred to the next suction flute 2a following the one in which the preceding step of calibrating or validating was carried out.

A first embodiment of the step of displacing is accomplished by moving the second conveyor 2 by a distance corresponding to the pitch, or a multiple of the pitch between adjacent flutes 2a of the first conveyor 2. In other words, the first conveyor 2 is rotated (with reference to the accompanying drawings) independently of the second conveyor 3 in such a way that once the step of transporting the sample product 5 from the second conveyor 3 to the first conveyor 2 has been completed, the sample product 5 is transferred to the next suction flute 2a following the one in which the preceding step of calibrating or validating was carried out.

With reference to the accompanying drawings, the term "pitch" is the distance between adjacent flutes. The term "distance", therefore may mean the value of the pitch or a multiple thereof. For example, the first conveyor 2 and the second conveyor 3 may be displaced from each other by a distance equivalent to the distance between three or five flutes (that is, by three or five multiples of the pitch) depending on the requirements of the calibration to be performed or the type of sensor used.

The steps of displacing, transferring and measuring are repeated a plurality of times, until the procedure has been completed on all the flutes 2a of the first conveyor 2.

Advantageously, the method described above allows automating the calibration procedure thanks to the independent motor architecture of the machine 1 whereby each single axis can be controlled independently.

In an embodiment not illustrated, the step of transferring the sample product 5 from the first conveyor 2 to the second conveyor 3 is accomplished by reversing the direction of movement of the first conveyor 2. In other words, once the inspection zone C has been passed (that is, after the sample product 5 has been measured), the direction of movement of the first conveyor 2 is inverted, causing the sample product 5 to follow the same path in reverse. Preferably, the sample product 5 is returned to the same flute of the second conveyor 3.

In another embodiment of the method of this invention, there is at least one further step of measuring the sample product 5 using the at least one sensor associated with the first conveyor 2. In other words, while the sample product 5 is on the first conveyor moving in the reverse direction, it passes through the inspection zone C once more and is measured again. That way, the result obtained from the previous measurement of the sample product 5 can be verified and confirmed.

In another embodiment of the method of this invention, the first conveyor 2 can be driven with alternating motion. More specifically, between the step of measuring the sample product 5 and the step of transferring the sample product 5 from the first conveyor 2 to a flute 3a of the second conveyor 3, the method comprises a step of defining the alternating motion of the first conveyor 2. This step is accomplished by reversing the direction of movement of the first conveyor 2 a predetermined number of times.

In a first variant of this embodiment, the sample product 5 is measured each time the operating movement of the conveyor 2 is repeated. In other words, a first step of reversing the motion is followed by another step of reversing so as to return the sample product 5 to its operating movement to perform another measurement.

Alternatively, each time the motion of the conveyor 2 is reversed, it is possible to perform another measurement on the sample product 5 so as to obtain a better calibration of the sensor C. In other words, both in the case of operating movement and in the case of "reversed" operating movement, the sample product is measured each time the sample product 5 crosses the inspection zone C.

In other words, the greater the number of measurements performed as a result of the number of reversals defining the alternating motion of the first conveyor 2 (corresponding to an equal number of times the sample product 5 crosses the inspection zone C), the more precise the calibration of the sensor will be. More specifically, the population of measurements is subjected to a series of statistical analyses which allows obtaining the above mentioned improved calibration on the at least one sensor associated with the flute 2a that holds the sample product 5. With reference to the embodiment of the machine 1 of Figures 2A-2F - that is to say, the embodiment in which there is a third conveyor 4 - the method comprises, between the step of measuring and the step of transferring the sample product 5 from the first conveyor 2 to the second conveyor 3, a step of transferring the sample product 5 from the first conveyor 2 to the third conveyor 4. In other words, once the sample product 5 has passed the inspection zone C, it is transferred to one of the flutes 4a of the third conveyor 4.

It is stressed that in this embodiment, the second conveyor 3 and the third conveyor 4 are identical and therefore the reference numeral 2 denotes the starting conveyor and the reference numeral 4 the further conveyor which the sample product 5 is transferred to when the step of measuring has been completed.

Once the sample product 5 has been transferred to the third conveyor 4, the direction of movement of the machine 1 is reversed. In other words, the directions of movement of the conveyors 2, 3 and 4 of the machine 1 are reversed. That way, the sample product 5 can be transferred from the third conveyor 4 to the first conveyor 2.

Similarly to the embodiment of the method described previously, when the sample product 5 has been transferred from the third conveyor 4 to the first conveyor 2, it is possible to transfer the sample product 5 to the second conveyor 3 and to displace the conveyor 2 and the conveyor 3 from each other in order to repeat the step of measuring the sample product 5 in the second flute II of the first conveyor 2.

Alternatively, and again similarly to the embodiment of the method described previously, when the sample product 5 has been transferred from the third conveyor 4 to the first conveyor 2, it is possible to perform the further step of measuring the sample product 5 through the at least one sensor associated with the first conveyor 2 while the sample product 5 is moved with the reversed operating motion of the first conveyor 2. In other words, the sample product 5 is made to pass through the inspection zone C once more while it is being held in the flute I of the first conveyor 2 in order to verify the result obtained from the measurement.

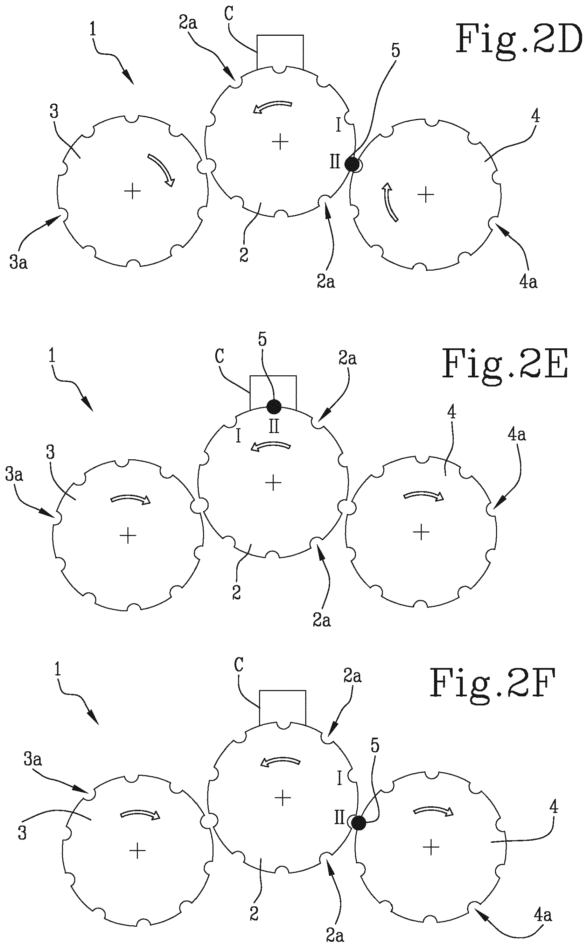

With reference to the embodiment of the method represented in Figures 2A-2F, the method comprises transferring the sample product from the second conveyor 3 to the first conveyor 2 (Figure 2A); at this point, the sample product 5 being held in the first flute I (Figure 2B) is measured and then transferred from the first conveyor 2 to the third conveyor 4 (Figure 2C). At this point, the method comprises the step of displacing the third conveyor 4 and the first conveyor 2 from each other so that, during transfer from the third conveyor 4 to the first conveyor 2 (Figure 2D), the sample product 5 is received in a flute 2a of the first conveyor 2 different from the flute 2a in which it was previously accommodated. More specifically, the step of displacing is performed in such a way that, during transfer from the third conveyor 4 to the first conveyor 2 (Figure 2D), the sample product 5 is received in the second flute II. In other words, the displacement is equal to a distance corresponding to at least one pitch between adjacent flutes 2a of the first conveyor 2.

The step of displacing the third conveyor 4 and the first conveyor 2 from each other is accomplished by moving (that is, in the embodiment of the accompanying drawings, by rotating) the third conveyor 4 by a distance corresponding to at least one pitch, or a multiple of the pitch between adjacent flutes 2a of the first conveyor 2.

Alternatively, the step of displacing the third conveyor 4 and the first conveyor 2 from each other is accomplished by moving (that is, in the embodiment of the accompanying drawings, by rotating) the third conveyor 4 by a distance corresponding to at least one pitch between adjacent flutes 2a of the first conveyor 2.

Next, a step of measuring the sample product 5 can be performed in the inspection zone C when it is in the second flute II (Figure 2E), after which the product can be returned to the second conveyor 3 (Figure 2F). Preferably, in this case, too, the first conveyor 2 can be set to move with alternating motion (with a corresponding number of measurements) before the sample product 5 is returned to the second conveyor 3.

Advantageously, the embodiment of the method represented in Figures 2A-2F allows speeding up the calibration of the machine 1 by halving the number of "cycles" to be completed compared to the embodiments described previously.

The method just described is also applicable to a machine 1 in which the first conveyor 2 forms part of a train of conveyors connected to each other by a fixed transmission. In this embodiment, the second conveyor 3 constitutes an accessory conveyor outside the train of conveyors and driven in rotation by an independent motor. The first conveyor 2 and the second conveyor, 3 are connected to each other by a single, intermediate connecting conveyor defined by an operational conveyor adjacent to the first conveyor 2. In this context, the second conveyor 3 may be located anywhere in the train of conveyors. In other words, there may or may not be two or more conveyors between the first conveyor 2 and the second conveyor 3. In other words, the method described above is also applicable to this embodiment of the machine 1. In this context, the step of displacing is performed between the train of conveyors that includes the first conveyor 2 and the second conveyor 3 that is made in the form of the accessory conveyor outside the train of conveyors.

This invention also relates to a method for calibrating a machine 1 (like those described above) comprising, like the method described above, the step of placing a sample product 5 in a first flute I of a first conveyor 2 associated with at least one sensor and the at least one step of measuring, with the at least one sensor, the sample product 5 held in the first flute I of the first conveyor 2. The step of measuring while the sample product 5 is moved according to an operating movement of the first conveyor 2. In other words, the step of measuring is performed when the sample product 5 is transported through an inspection zone C.

The method comprises, at this point, a step of defining an alternating motion of the first conveyor 2 by reversing the direction of movement of the first conveyor 2 a certain number of times. More specifically, this step comprises reversing the direction of movement of the first conveyor 2 a large number of times.

The method also comprises performing a number of measurements with the at least one sensor while the sample product 5 is being moved with alternating motion.

More specifically, the method comprises repeating the step of measuring the sample product 5 at least for each of the operating movements of the first conveyor 2 with the sample product 5 seated in the same first flute I. In other words, after reversing the motion the first time, no measurement is performed and, after passing the inspection zone C, the motion is reversed again (causing the first conveyor 2 to perform the operating movement) and this time the sample product 5 is measured when it crosses the inspection zone C.

The step of measuring is also performed for each of the reverse movements of the first conveyor 2 with the sample product 5 seated in the same first flute I. In other words, the number of measurements corresponds to the number of reversals defining the alternating motion in its entirety.

Advantageously, the larger the number of measurements performed, the greater the precision with which the machine 1 is calibrated. More specifically, each measurement involves comparing a theoretical value with a value measured by the sensor and performing a calibration (or a validation of the system) as a function of a series of statistical analyses on the "population" of the measurements.

This method utilizes the same inventive concept as the method described above, whereby motion is reversed so that the step of measuring the sample product 5 is repeated in the same flute and with the same sensor for a predetermined number of times to define a statistical sample having a population of predetermined size.

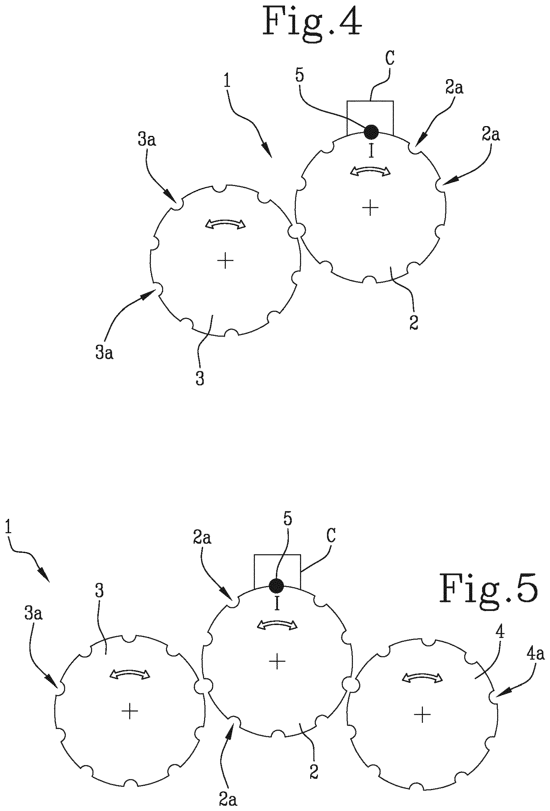

In a further embodiment, with reference to Figure 4, the method comprises initially placing the sample product 5 in a first flute I of a first conveyor 2 associated with at least one sensor. Advantageously, two or more sample products 5 of different value (that is, properties such as length, density, humidity, etc.) - for example, minimum, typical, maximum - or with known difference between the sample products 5, could be placed on the first conveyor 2 to optimize the calibration procedure.

Placing the sample product 5 may mean putting the sample product 5 on the second conveyor 3. More specifically, the sample product 5 may be placed in a flute 3a of the second conveyor 3 and transferred to the first conveyor 2. The sample product 5 is transferred from the second conveyor 3 to a flute 2a of the first conveyor 2. In the accompanying drawings, the reference label I indicates the flute 2a that receives the sample product 5.

At this point, as shown in Figure 2, a measurement is performed on the sample product 5 held in the flute I of the first conveyor 2. The measurement is performed by at least one sensor while the sample product 5 is moved according to the operating movement of the first conveyor 2. By operating movement is meant the movement normally used during the production of the articles. In the embodiment of Figure 4, the operating movement is represented by a clockwise rotation of the first conveyor 2.

The step of measuring is performed when the sample product 5 is transported through an inspection zone C. In other words, the step of measuring is performed when the operating rotation of the first conveyor 2 causes the sample product 5 being held in the flute I to move through the inspection zone C. More specifically, when the sample product 5 is transported through the inspection zone C, measurements are taken and then compared with a theoretical value. By theoretical value is meant a reference value expected of the measurement performed by the sensor, corresponding to the ideal operation which allows obtaining the desired results from the production of the articles. In both of the embodiments - that is, with a single sensor or with a plurality of sensors - if the measured value and the theoretical value coincide, the result is validated; otherwise, calibration (as described above) is performed as a function of the difference between the measurement values. In other words, the values obtained from the measurements performed are then processed in a specific control unit to allow the at least one sensor to be calibrated.

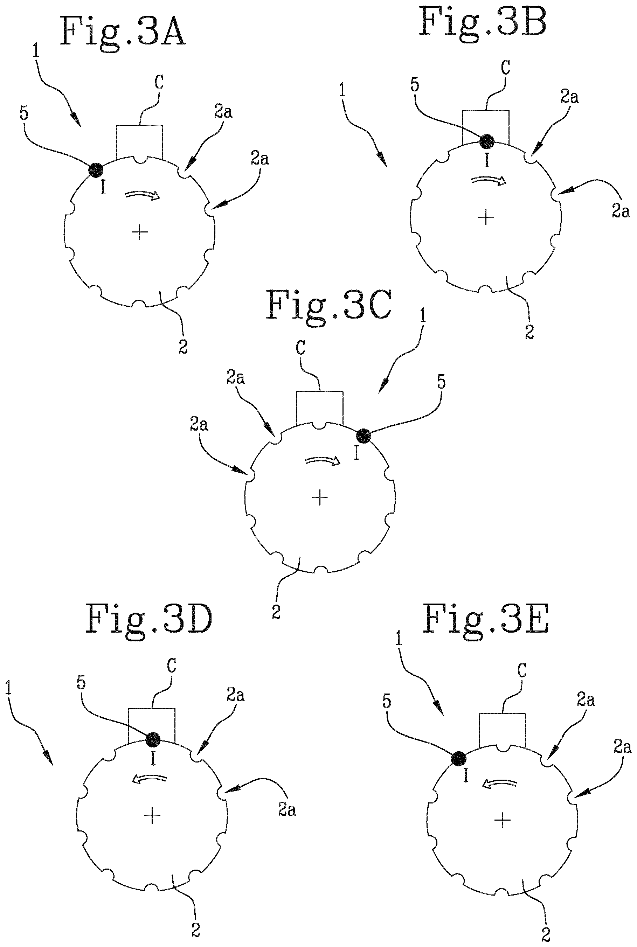

The method comprises, at this point, a step (Figures 3A-3E) of defining an alternating motion of the first conveyor 2 by reversing the direction of movement of the first conveyor 2 a certain number of times. More specifically, this step comprises reversing the direction of movement of the first conveyor 2 a large number of times.

With reference to the accompanying drawings, by "alternating motion" is meant reversing the direction in sequence to define a sequence of rotations of the first conveyor 2 in clockwise and anticlockwise direction (as schematically represented in Figures 3A-3E). In other words, the alternating motion involves a series of operating rotations of the first conveyor 2, alternated with operating rotations in reverse.

The method also comprises performing a number of measurements with the at least one sensor while the sample product 5 is being moved with alternating motion.

More specifically, the method comprises repeating the step of measuring the sample product 5 at least for each of the operating movements of the first conveyor 2 with the sample product 5 seated in the same first flute I. In other words, after reversing the motion the first time, no measurement is performed and, after passing the inspection zone C, the motion is reversed again (causing the first conveyor 2 to perform the operating movement) and this time the sample product 5 is measured when it crosses the inspection zone C.

The step of measuring is also performed for each of the reverse movements of the first conveyor 2 with the sample product 5 seated in the same first flute I. In other words, the number of measurements corresponds to the number of reversals defining the alternating motion in its entirety. Advantageously, the measurement with the sample product 5 moving in reverse allows halving the total number of reversals compared to the case where measurement is performed only during the operating movement.

In other words, the method comprises a step of calibrating the sensor based on a plurality of measurements obtained by measuring the sample product 5 seated in the same flute I. The step of calibrating is accomplished by calculating the average measurement from the plurality of measurements.

The step of repeating the step of measuring the sample product 5 (at least for each of the operating movements of the first conveyor 2) is accomplished by repeating the step of measuring for a number of times greater than or equal to 2. Preferably, the step of measuring the sample product 5 is accomplished by repeating the step of measuring for a number of times greater than or equal to 5.

Advantageously, the larger the number of measurements performed, the greater the precision with which the machine 1 is calibrated. More specifically, each measurement involves comparing a theoretical value with a value measured by the sensor and performing a calibration (or a validation of the system) as a function of a series of statistical analyses on the "population" of the measurements. More specifically, the statistical analyses are performed on different parameters obtained from the "population" of measurements: for example, a calculated average measurement value.

The method allows repeating the step of measuring the sample product 5 in the same flute and with the same sensor for a predetermined number of times to define a statistical sample having a population of predetermined size so as to increase calibration precision as a function of the result to be obtained.

The method described above can also be used in a machine 1 like the one shown in Figure 5, where the alternating motion is between the second conveyor 3 and the third conveyor 4. More specifically, the alternating motion is defined in the circular arc portion of the first conveyor 2, between the second conveyor 3 and the third conveyor 4, allowing the inspection zone C to be crossed multiple times and the sample product 5 to be measured as described above.

Advantageously, the circular arc defined above allows reducing the time between one measurement and another so as to quickly obtain the desired number of measurements.

In an embodiment of the method described above, the second conveyor 3 and the third conveyor 4 can be utilized by transferring the sample product 5 to them in such a way that the passage between the different conveyors can be useful to perform reversals with minimum acceleration/deceleration: for example, if calibration is not static and requires the sample product 5 to move through the inspection zone C at a certain speed.

In other words, the method comprises, before reversing the direction of movement of the first conveyor 2 each time, a step of transferring the sample product 5 from the first conveyor 2 to the second conveyor 3 (in the embodiment of Figure 2) and/or to the third conveyor 4 (in the embodiment of Figure 3). The method further comprises, after reversing the direction of movement of the first conveyor 2 each time, a step of transferring the sample product 5 from the second conveyor 3 and/or from the third conveyor 4 to the first conveyor 2. The step of reversing is carried out simultaneously on the first conveyor 2 and on the second conveyor 3 and/or third conveyor 4.

In a further embodiment of the method not illustrated, the steps of placing the sample product 5 in the flute I of the first conveyor, performing at least one measurement on the sample product 5, reversing the direction of movement a predetermined number of times and repeating the step of measuring the sample product 5 at least for each of the operating movements of the first conveyor 2 define a sub-step of calibrating associated with the flute I of the first conveyor. This sub-step of calibrating is repeated for a plurality of different flutes 2a of the first conveyor 2. Preferably, the sub-step of calibrating is repeated for all the flutes 2a of the first conveyor 2.

Between consecutive sub-steps of calibrating, the first sample 5 is automatically moved between different flutes 2a of the first conveyor.

More specifically, between consecutive sub-steps of calibrating associated with different flutes of the first conveyor 2, an automatic movement is performed with the aid of the second conveyor 3 (embodiment of the machine 1 of Figure 4) and/or of the third conveyor 4 (embodiment of the machine 1 of Figure 5).

The second conveyor 3 and/or the third conveyor 4 may be adjacent to the first conveyor 2, as shown in Figures 4 and 5.

Advantageously, this invention allows automating the calibration procedure and minimizes the human factor that might lead to errors in calibrating the machine 1.

Advantageously, all the operator needs to do is insert the sample product 5 in the first conveyor 2 (or in the second conveyor 3) and remove it once the sensor (or the sensors) associated with the flutes 2a have been calibrated.

Advantageously, the method described above is used both to calibrate a single sensor associated with a plurality of flutes 2a of the first conveyor 2 and to calibrate a plurality of sensors, where each sensor is associated with a specific flute 2a.

Advantageously, the method described above allows calibrating complex systems both in the case of a machine 1 provided with independent axes for each conveyor and of more complex mechanisms as in the case of a machine 1 in which at least two conveyors are connected to each other by a fixed transmission.

Advantageously, the method described above can be used for complex machinery and simpler machinery, in particular using the sample product 5 certified on process machines 1.

Furthermore, the method described above allows suppressing external noise in calibrating the sensors.

## Claims

1. A method for calibrating a machine (1) for the production of rod-shaped articles, the machine (1) comprising a plurality of conveyors (2, 3, 4), each provided with a plurality of flutes (2a, 3a, 4a) for accommodating the articles, comprising the following steps:
- placing a sample product (5) in a first flute (I) of a first conveyor (2) associated with at least one sensor;
- performing, with the at least one sensor, at least one measurement on the sample product (5) held in the first flute (I) of the first conveyor (2) while the sample product (5) is moved according to an operating movement of the first conveyor (2);
- transferring the sample product (5) from the first conveyor (2) to a flute (3a) of a second conveyor (3);
displacing the first conveyor (2) and the second conveyor (3) from each other;
- transferring the sample product (5) from the second conveyor (3) to a second flute (II) of the first conveyor (2), different from the first flute (I);
- repeating the step of measuring while the sample product (5) held in the second flute (II) is moved according to an operating movement of the first conveyor (2);
processing in a control unit the values obtained from the measurements performed by comparing the values measured by the at least one sensor with a theoretical value so as to calibrate the at least one sensor.

2. The method according to claim 1, wherein the step of displacing is accomplished by moving the first or the second conveyor (2, 3) by a distance corresponding to the pitch or a multiple of the pitch of the first conveyor (2), the pitch being defined between adjacent flutes (2a) of the first conveyor (2).

3. The method according to claim 1 or 2, wherein the step of transferring the sample product (5) from the first conveyor (2) to the second conveyor (3) is accomplished by reversing the direction of movement of the first conveyor (2), preferably bringing the sample product (5) back to the same flute of the second conveyor (3).

4. The method according to one or more of the preceding claims, comprising, between the step of measuring the sample product (5) and the step of transferring the sample product (5) from the first conveyor (2) to a flute (3a) of the second conveyor (3), a step of performing an alternating movement of the first conveyor (2) by reversing the direction of movement of the first conveyor (2) a predetermined number of times, and wherein at least one measurement of the sample product (5) held on the first conveyor (2) is performed by the at least one sensor at least during each step of moving according to an operating movement of the first conveyor (2).

5. The method according to one or more of the preceding claims, wherein the machine comprises a third conveyor (4) and wherein the method comprises, between the step of measuring and the step of transferring the sample product (5) from the first conveyor (2) to the second conveyor (3), the steps of:
- transferring the sample product (5) from the first conveyor (2) to the third conveyor (4);
- reversing the direction of movement of the conveyors (2, 3, 4) of the machine (1);
- transferring the sample product (5) from the third conveyor (4) to the first conveyor (2).

6. The method according to one or more of claims 3-5, further comprising at least one further step of measuring the sample product (5) by means of the at least one sensor associated with the first conveyor (2) while the sample product (5) performs the reversed movement of the first conveyor (2).

7. The method according to claim 5 or 6, further comprising the step of displacing the third conveyor (4) and the first conveyor (2) from each other after the step of transferring the sample product (5) to the third conveyor (4) so that, during transfer from the third conveyor (4) to the first conveyor (2), the sample product (5) is received in a flute (2a) of the first conveyor (2) different from the flute (2a) in which it was previously accommodated, the conveyors being displaced from each other preferably by a distance corresponding to the pitch, or a multiple of the pitch, of the first conveyor (2).

8. The method according to one or more of claims 5 to 7, wherein the step of displacing the third conveyor (4) and the first conveyor (2) from each other is accomplished by moving the third conveyor (4) or the first conveyor (2) by a distance corresponding to the pitch, or a multiple of the pitch, of the first conveyor (2).

9. The method according to one or more of the preceding claims, wherein the flutes (2a) of the first conveyor (2) are associated with a single sensor in common, preferably fixed or stationary.

10. The method according to one or more of the preceding claims, wherein each flute (2a) of the first conveyor (2) is associated with a respective sensor, movable synchronously with the flutes (2a) of the first conveyor (2) and/or mounted on the first conveyor (2).

11. The method according to one or more of the preceding claims, wherein the method is applied to a machine (1) in which the first conveyor (2) is driven by a motor independent at least of the second conveyor (3), preferably in which all the conveyors (2, 3, 4) of the machine (1) are driven by respective independent motors.

12. The method according to one or more of claims 1 to 10, wherein the method is applied to a machine (1) in which the first conveyor (2) forms part of a train of conveyors connected to each other by a fixed transmission, and wherein the second conveyor (3) is an accessory conveyor outside the train of conveyors and driven by an independent motor.

13. The method according to claim 12, wherein the first and second conveyors (2, 3) are connected to each other by a single, intermediate connecting conveyor defined by an operational conveyor adjacent to the first conveyor (2).

14. The method according to one or more of claims 5 to 13, wherein the second conveyor (3) is located upstream of the first conveyor (2) and the third conveyor (4) is located downstream of the first conveyor (2), or vice versa.

15. The method according to one or more of the preceding claims, wherein the steps of:
- performing, with the at least one sensor, at least one measurement on the sample product (5) held in the first flute (I) of a first conveyor (2) while the sample product (5) is moved according to an operating movement of the first conveyor (2),
- transferring the sample product (5) from the first conveyor (2) to a flute (3a) of a second conveyor (3),
- displacing the first conveyor (2) and the second conveyor (3) from each other, and
- transferring the sample product (5) from the second conveyor (3) to a second flute (II) of the first conveyor (2), adjacent to the first flute (I) are repeated a plurality of times, preferably until the procedure has been completed on all the flutes (2a) of the first conveyor (2).

## Patentansprüche

1. Verfahren zum Kalibrieren einer Maschine (1) zur Herstellung von stabförmigen Artikeln, wobei die Maschine (1) eine Vielzahl von Förderern (2, 3, 4) umfasst, die jeweils mit einer Vielzahl von Rillen (2a, 3a, 4a) zur Aufnahme der Artikel versehen sind, umfassend die folgenden Schritte:
- Platzieren eines Probenprodukts (5) in einer ersten Rille (I) eines ersten Förderers (2), der mindestens mit einem Sensor assoziiert ist;
- Durchführen, mit dem mindestens einen Sensor, mindestens einer Messung an dem Probenprodukt (5), das in der ersten Rille (I) des ersten Förderers (2) gehalten wird, während das Probenprodukt (5) gemäß einer Betriebsbewegung des ersten Förderers (2) bewegt wird;
- Überführen des Probenprodukts (5) von dem ersten Förderer (2) zu einer Rille (3a) eines zweiten Förderers (3) ;
Verschieben des ersten Förderers (2) und des zweiten Förderers (3) voneinander;
- Überführen des Probenprodukts (5) von dem zweiten Förderer (3) zu einer zweiten Rille (II) des ersten Förderers (2), die sich von der ersten Rille (I) unterscheidet;
- Wiederholen des Schrittes des Messens, während das in der zweiten Rille (II) gehaltene Probenprodukt (5) gemäß einer Betriebsbewegung des ersten Förderers (2) bewegt wird;
Verarbeiten der aus den durchgeführten Messungen erhaltenen Werte durch Vergleichen der von dem mindestens einen Sensor gemessenen Werte mit einem theoretischen Wert in einer Steuereinheit, um den mindestens einen Sensor zu kalibrieren.

2. Verfahren nach Anspruch 1, wobei der Schritt zum Verschieben durch Bewegen des ersten oder des zweiten Förderers (2, 3) um einen Abstand durchgeführt wird, der der Teilung oder einem Vielfachen der Teilung des ersten Förderers (2) entspricht, wobei die Teilung zwischen benachbarten Rillen (2a) des ersten Förderers (2) definiert ist.

3. Verfahren nach Anspruch 1 oder 2, wobei der Schritt zum Überführen des Probenprodukts (5) von dem ersten Förderer (2) zu dem zweiten Förderer (3) durch Umkehren der Bewegungsrichtung des ersten Förderers (2) durchgeführt wird, wobei das Probenprodukt (5) vorzugsweise zu derselben Rille des zweiten Förderers (3) zurückgebracht wird.

4. Verfahren nach einem oder mehreren der vorhergehenden Ansprüche, umfassend zwischen dem Schritt zum Messen des Probenprodukts (5) und dem Schritt zum Überführen des Probenprodukts (5) von dem ersten Förderer (2) zu einer Rille (3a) des zweiten Förderers (3) einen Schritt zum Durchführen einer alternierenden Bewegung des ersten Förderers (2) durch Umkehren der Bewegungsrichtung des ersten Förderers (2) eine vorbestimmte Anzahl von Malen, und wobei mindestens eine Messung des Probenprodukts (5), das auf dem ersten Förderer (2) gehalten wird, durch den mindestens einen Sensor mindestens während eines jeden Schrittes zum Bewegen gemäß einer Betriebsbewegung des ersten Förderers (2) durchgeführt wird.

5. Verfahren nach einem oder mehreren der vorhergehenden Ansprüche, wobei die Maschine einen dritten Förderer (4) umfasst und wobei das Verfahren zwischen dem Schritt zum Messen und dem Schritt zum Überführen des Probenprodukts (5) von dem ersten Förderer (2) zu dem zweiten Förderer (3) die folgenden Schritte umfasst:
- Überführen des Probenprodukts (5) von dem ersten Förderer (2) zu dem dritten Förderer (4);
- Umkehren der Bewegungsrichtung der Förderer (2, 3, 4) der Maschine (1);
- Überführen des Probenprodukts (5) von dem dritten Förderer (4) zu dem ersten Förderer (2).

6. Verfahren nach einem oder mehreren der Ansprüche 3-5, ferner umfassend mindestens einen weiteren Schritt zum Messen des Probenprodukts (5) mittels des mindestens einen Sensors, der mit dem ersten Förderer (2) assoziiert ist, während das Probenprodukt (5) die umgekehrte Bewegung des ersten Förderers (2) durchführt.

7. Verfahren nach Anspruch 5 oder 6, ferner umfassend den Schritt zum Verschieben des dritten Förderers (4) und des ersten Förderers (2) voneinander nach dem Schritt zum Überführen des Probenprodukts (5) zu dem dritten Förderer (4), so dass während der Überführung von dem dritten Förderer (4) zu dem ersten Förderer (2) das Probenprodukt (5) in einer Rille (2a) des ersten Förderers (2) empfangen wird, die sich von der Rille (2a) unterscheidet, in der es zuvor aufgenommen wurde, wobei die Förderer vorzugsweise um einen Abstand voneinander verschoben sind, der der Teilung oder einem Vielfachen der Teilung des ersten Förderers (2) entspricht.

8. Verfahren nach einem oder mehreren der Ansprüche 5 bis 7, wobei der Schritt zum Verschieben des dritten Förderers (4) und des ersten Förderers (2) voneinander durch Bewegen des dritten Förderers (4) oder des ersten Förderers (2) um einen Abstand durchgeführt wird, der der Teilung oder einem Vielfachen der Teilung des ersten Förderers (2) entspricht.

9. Verfahren nach einem oder mehreren der vorhergehenden Ansprüche, wobei die Rillen (2a) des ersten Förderers (2) mit einem einzigen gemeinsamen, vorzugsweise festen oder stationären Sensor assoziiert sind.

10. Verfahren nach einem oder mehreren der vorhergehenden Ansprüche, wobei eine jede Rille (2a) des ersten Förderers (2) mit einem jeweiligen Sensor assoziiert ist, der synchron mit den Rillen (2a) des ersten Förderers (2) bewegbar und/oder auf dem ersten Förderer (2) montiert ist.

11. Verfahren nach einem oder mehreren der vorhergehenden Ansprüche, wobei das Verfahren auf eine Maschine (1) angewendet wird, in der der erste Förderer (2) durch einen Motor angetrieben wird, der zumindest von dem zweiten Förderer (3) unabhängig ist, wobei vorzugsweise alle Förderer (2, 3, 4) der Maschine (1) durch jeweilige unabhängige Motoren angetrieben werden.

12. Verfahren nach einem oder mehreren der Ansprüche 1 bis 10, wobei das Verfahren auf eine Maschine (1) angewendet wird, in der der erste Förderer (2) einen Teil einer Folge von Förderern bildet, die durch ein festes Getriebe miteinander verbunden sind, und wobei der zweite Förderer (3) ein Zusatzförderer außerhalb der Folge von Förderern ist und durch einen unabhängigen Motor angetrieben wird.

13. Verfahren nach Anspruch 12, wobei der erste und der zweite Förderer (2, 3) durch einen einzigen Zwischenverbindungsförderer miteinander verbunden sind, der durch einen Betriebsförderer benachbart zum ersten Förderer (2) definiert ist.

14. Verfahren nach einem oder mehreren der Ansprüche 5 bis 13, wobei der zweite Förderer (3) stromaufwärts des ersten Förderers (2) angeordnet ist und der dritte Förderer (4) stromabwärts des ersten Förderers (2) angeordnet ist oder umgekehrt.

15. Verfahren nach einem oder mehreren der vorhergehenden Ansprüche, wobei die folgenden Schritte:
- Durchführen, mit dem mindestens einen Sensor, mindestens einer Messung an dem Probenprodukt (5), das in der ersten Rille (I) eines ersten Förderers (2) gehalten wird, während das Probenprodukt (5) gemäß einer Betriebsbewegung des ersten Förderers (2) bewegt wird,
- Überführen des Probenprodukts (5) von dem ersten Förderer (2) zu einer Rille (3a) eines zweiten Förderers (3),
- Verschieben des ersten Förderers (2) und des zweiten Förderers (3) voneinander, und
- Überführen des Probenprodukts (5) von dem zweiten Förderer (3) zu einer zweiten Rille (II) des ersten Förderers (2), die der ersten Rille (I) benachbart ist, mehrmals wiederholt werden, vorzugsweise bis der Vorgang an allen Rillen (2a) des ersten Förderers (2) abgeschlossen ist.

## Revendications

1. Procédé d'étalonnage d'une machine (1) pour la production d'articles en forme de tige, la machine (1) comprenant une pluralité de transporteurs (2, 3, 4), chacun pourvu d'une pluralité de cannelures (2a, 3a, 4a) pour loger les articles, comprenant les étapes suivantes :
- placer un produit d'échantillon (5) dans une première cannelure (I) d'un premier transporteur (2) associé à au moins un capteur ;
- effectuer, avec l'au moins un capteur, au moins une mesure sur le produit d'échantillon (5) maintenu dans la première cannelure (I) du premier transporteur (2) pendant que le produit d'échantillon (5) est déplacé selon un déplacement de fonctionnement du premier transporteur (2) ;
- transférer le produit d'échantillon (5) du premier transporteur (2) vers une cannelure (3a) d'un deuxième transporteur (3) ;
déplacer le premier transporteur (2) et le deuxième transporteur (3) l'un par rapport à l'autre ;
- transférer le produit d'échantillon (5) du deuxième transporteur (3) vers une deuxième cannelure (II) du premier transporteur (2), différente de la première cannelure (I) ;
- répéter l'étape de mesure pendant que le produit d'échantillon (5) maintenu dans la deuxième cannelure (II) est déplacé selon un déplacement de fonctionnement du premier transporteur (2) ;
traiter dans une unité de commande les valeurs obtenues à partir des mesures effectuées en comparant les valeurs mesurées par l'au moins un capteur à une valeur théorique de manière à étalonner l'au moins un capteur.

2. Procédé selon la revendication 1, dans lequel l'étape de déplacement est accomplie en déplaçant le premier ou le deuxième transporteur (2, 3) d'une distance correspondant au pas ou à un multiple du pas du premier transporteur (2), le pas étant défini entre les cannelures adjacentes (2a) du premier transporteur (2).

3. Procédé selon la revendication 1 ou 2, dans lequel l'étape consistant à transférer le produit d'échantillon (5) du premier transporteur (2) au deuxième transporteur (3) est réalisée en inversant le sens de déplacement du premier transporteur (2), de préférence en ramenant le produit d'échantillon (5) sur la même cannelure du deuxième transporteur (3).

4. Procédé selon une ou plusieurs des revendications précédentes, comprenant, entre l'étape de mesure du produit d'échantillon (5) et l'étape de transfert du produit d'échantillon (5) du premier transporteur (2) vers une cannelure (3a) du deuxième transporteur (3), une étape consistant à effectuer un déplacement alternatif du premier transporteur (2) en inversant le sens de déplacement du premier transporteur (2) un nombre prédéterminé de fois, et dans lequel au moins une mesure du produit d'échantillon (5) maintenu sur le premier transporteur (2) est effectuée par l'au moins un capteur au moins pendant chaque étape de déplacement selon un déplacement de fonctionnement du premier transporteur (2) .

5. Procédé selon une ou plusieurs des revendications précédentes, dans lequel la machine comprend un troisième transporteur (4) et dans lequel le procédé comprend, entre l'étape de mesure et l'étape de transfert du produit d'échantillon (5) du premier transporteur (2) au deuxième transporteur (3), les étapes de :
- transférer le produit d'échantillon (5) du premier transporteur (2) au troisième transporteur (4) ;
- inverser le sens de déplacement des transporteurs (2, 3, 4) de la machine (1) ;
- transférer le produit d'échantillon (5) du troisième transporteur (4) au premier transporteur (2).

6. Procédé selon une ou plusieurs des revendications 3-5, comprenant de plus au moins une étape supplémentaire consistant à mesurer le produit d'échantillon (5) au moyen de l'au moins un capteur associé au premier transporteur (2) pendant que le produit d'échantillon (5) effectue le déplacement inversé du premier transporteur (2).

7. Procédé selon la revendication 5 ou 6, comprenant de plus l'étape consistant à déplacer le troisième transporteur (4) et le premier transporteur (2) l'un par rapport à l'autre après l'étape de transfert du produit d'échantillon (5) sur le troisième transporteur (4) de sorte que, pendant le transfert du troisième transporteur (4) vers le premier transporteur (2), le produit d'échantillon (5) soit reçu dans une cannelure (2a) du premier transporteur (2) différente de la cannelure (2a) dans laquelle il était précédemment logé, les transporteurs étant déplacés l'un par rapport à l'autre de préférence d'une distance correspondant au pas, ou à un multiple du pas, du premier transporteur (2) .

8. Procédé selon une ou plusieurs des revendications 5 à 7, dans lequel l'étape consistant à déplacer le troisième transporteur (4) et le premier transporteur (2) l'un par rapport à l'autre est accomplie en déplaçant le troisième transporteur (4) ou le premier transporteur (2) d'une distance correspondant au pas, ou à un multiple du pas, du premier transporteur (2).

9. Procédé selon une ou plusieurs des revendications précédentes, dans lequel les cannelures (2a) du premier transporteur (2) sont associées à un seul capteur en commun, de préférence fixe ou stationnaire.

10. Procédé selon une ou plusieurs des revendications précédentes, dans lequel chaque cannelure (2a) du premier transporteur (2) est associée à un capteur respectif, déplaçable de manière synchrone avec les cannelures (2a) du premier transporteur (2) et/ou monté sur le premier transporteur (2).

11. Procédé selon une ou plusieurs des revendications précédentes, dans lequel le procédé est appliqué à une machine (1) dans laquelle le premier transporteur (2) est entraîné par un moteur indépendant au moins du deuxième transporteur (3), de préférence dans laquelle tous les transporteurs (2, 3, 4) de la machine (1) sont entraînés par des moteurs indépendants respectifs.

12. Procédé selon une ou plusieurs des revendications 1 à 10, dans lequel le procédé est appliqué à une machine (1) dans laquelle le premier transporteur (2) fait partie d'un train de transporteurs reliés entre eux par une transmission fixe, et dans lequel le deuxième transporteur (3) est un transporteur auxiliaire extérieur au train de transporteurs et entraîné par un moteur indépendant.

13. Procédé selon la revendication 12, dans lequel les premier et deuxième transporteurs (2, 3) sont reliés l'un à l'autre par un seul transporteur de raccordement intermédiaire défini par un transporteur fonctionnel adjacent au premier transporteur (2).

14. Procédé selon une ou plusieurs des revendications 5 à 13, dans lequel le deuxième transporteur (3) est situé en amont du premier transporteur (2) et le troisième transporteur (4) est situé en aval du premier transporteur (2), ou vice versa.

15. Procédé selon une ou plusieurs des revendications précédentes, dans lequel les étapes de :
- effectuer, avec l'au moins un capteur, au moins une mesure sur le produit d'échantillon (5) maintenu dans la première cannelure (I) d'un premier transporteur (2) pendant que le produit d'échantillon (5) est déplacé selon un déplacement de fonctionnement du premier transporteur (2),
- transférer le produit d'échantillon (5) du premier transporteur (2) vers une cannelure (3a) d'un deuxième transporteur (3),
- déplacer le premier transporteur (2) et le deuxième transporteur (3) l'un par rapport à l'autre, et
- transférer le produit d'échantillon (5) du deuxième transporteur (3) vers une deuxième cannelure (II) du premier transporteur (2), adjacente à la première cannelure (I),
sont répétées plusieurs fois, de préférence jusqu'à ce que la procédure ait été achevée sur toutes les cannelures (2a) du premier transporteur (2).
